# EUROPEAN PATENT SPECIFICATION

(11) **EP 1 309 421 B1**
(45) Date of publication and mention of the grant of the patent: **19.07.2006**
(21) Application number: 01906125.8
(22) Date of filing: 15.02.2001
(51) Int. Cl.: B23Q 1/01

(54) **MULTI-AXIS LINEAR MOTOR MACHINE TOOL**
MEHRACHSIGE WERKZEUGMASCHINE MIT LINEARMOTOREN
MACHINE-OUTIL A MOTEURS LINEAIRES MULTIAXIAUX

(30) Priority: 03.10.2000 WO PCT/IT00/00394
(43) Date of publication of application: 14.05.2003
(73) Proprietor: Camozzi Machine Tools S.p.A., 25126 Brescia (IT)
(72) Inventor: CAMOZZI, Attilio Camozzi Holding S.p.A., I-25126 Brescia (IT); CAMOZZI, Ettore Camozzi Holding S.p.A., I-25126 Brescia (IT)
(74) Representative: Siniscalco, Fabio
(86) International application number: PCT/IT2001/000067
(87) International publication number: WO 2002/028592

(56) References cited:
- EP-A- 0 583 085
- EP-A- 0 893 196
- JP-A- 5 104 332
- JP-A- 8 309 641
- JP-A- 9 262 727
- JP-A- 2000 218 443
- JP-A- 2000 237 923
- US-A- 5 368 425

## Description

The present invention relates to a machine tool according to the preamble of claim 1.

More particularly, the subject of the invention is a machine tool of the type having three axes, wherein the tool, for example a chip removing tool, such as a milling cutter, is moved along a feed path at high speed by the use of linear motors.

The requirement to be fulfilled with this type of machine is to succeed in moving the tool rapidly and with high accelerations, even of 0.5 G, while at the same time guaranteeing the precision of the machining to be carried out. This involves the need for having a structure designed so that it is strong enough not to be distorted during the machining and at the same time to be rigid in the sense of not starting to vibrate either because of the effect of operation of the motors or the effect of the dynamic stresses which develop during the machining.

Generally, these machines comprise a column, extending in a vertical direction (Y axis), which column is slidingly supported by horizontal guides (X axis) of a bed. Along the column extend vertical guides on which a saddle mount is operably connected and supported. The aforesaid saddle mount is provided in its turn with horizontal guides which serve to slidingly support a main saddle, for its guided movement along a third axis (Z axis). The main saddle then serves to support a spindle for the movement of the tool.

A machine having the aforesaid characteristics is known from the document US 5,368425.

The machine tool referred to in US Patent 5,368425 has the drawback that the aforesaid requirement can be fulfilled only by the use of a very heavy and bulky structure, also with regard to the parts of the dynamic structure thereof, or the parts of the machine tool which are intended to be moved during the machining, above all the column constituting the Y axis of the machine. It is obvious that the presence of large dynamic masses to be moved at high accelerations is an extremely undesirable drawback, involving significant problems with regard to the design and dimensioning of the parts of the machine tool. In fact, this is manifested in an increase in the costs of the machine and an increase in the overall weight thereof.

The problem on which the present invention is based is that of devising a machine tool of the type specified which allows the aforesaid requirement to be fulfilled while at the same time obviating the drawbacks that have been mentioned with reference to the machine tools of the prior art.

This problem is solved by a machine tool according to claim 1.

The present invention also relates to a machining centre according to claim 42.

Further characteristics and advantages of the machine tool and of the machining centre according to the invention will become clear from the following description of some preferred embodiments, provided by way of non-limiting example, with reference to the appended drawings, in which:
Figure 1 illustrates axonometrically a diagrammatic view of a machine tool according to the present invention;
Figure 2 illustrates axonometrically a machining centre including the machine in Figure 1;
Figure 3 illustrates a front view of the machining centre in Figure 2;
Figure 4 illustrates a side view of the machining centre in Figure 2;
Figure 5 illustrates a view from above of the machining centre in Figure 2.

With reference to the aforesaid drawings, a machine tool is indicated as a whole by 1. The machine tool 1 comprises a bed 2 which supports at least one column 3 on which at least one saddle mount 4 can slide. In said saddle mount 4 there is provided a main saddle 5 adapted to support a spindle 6 for the movement of a tool.

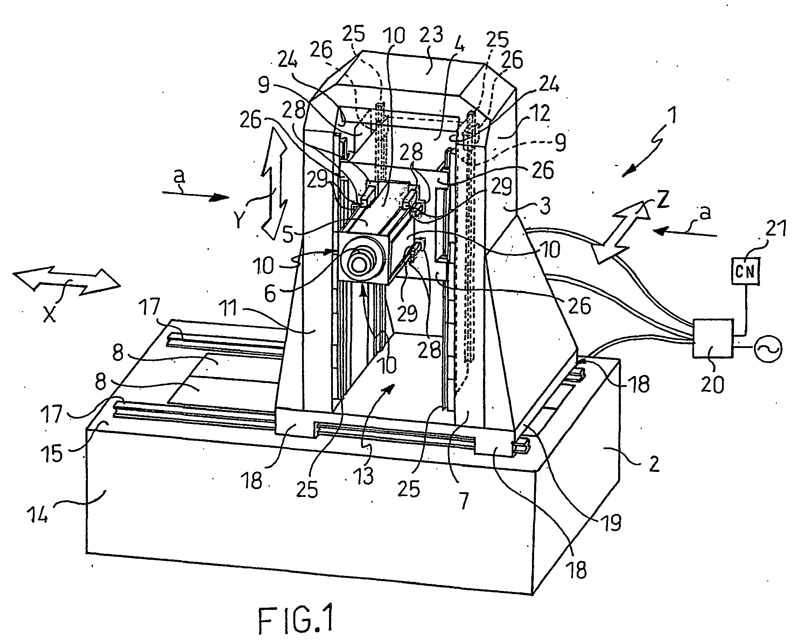

Said bed 2 defines at least a first axis (X) arranged longitudinally to the bed 2. For example, said first axis (X) is arranged horizontally. To said first axis (X) said at least one column 3 is operably connected such that it is supported by the bed only by one of its ends 7 and can be guided along said first axis (X). The at least one column 3 extends away from the bed 2, defining a second axis (Y). For example, said second axis (Y) is arranged orthogonally to the first (X) and, in particular, vertically. The at least one saddle mount 4 is supported on the at least one column 3 so as to be guided along said second axis (Y). The at least one saddle mount in its turn defines a third axis (Z), for example arranged orthogonally to the first and second axis (X, Y) and, in particular, horizontally. Said saddle mount 4 supports the main saddle 5 so that it is guided along said third axis (Z). In the main saddle 5 the spindle 6 is received so that its operative end can receive the tang of a tool (Figure 1).

Said axes are driven by means of linear motors 8, 9 and 10, so as to permit the tool, supported by the spindle, to reach any point whatever of a working volume facing the machine 1 and having dimensions equal to the strokes that can be executed by the column 3, by the saddle mount 4 and respectively by the main saddle 5 along said first, second and third axis (X, Y and Z).

Advantageously, said at least one column comprises a portal structure having a first shoulder 11 opposed to a second shoulder 12. Said shoulders 11, 12 define or bound a window 13 within which is arranged the saddle mount 4 operably connected to the second axis (Y).

Between the shoulders 11, 12 and the saddle mount 4 are interposed the linear motors 9, which permit the movement of the saddle mount 4 along said second axis (Y) and have an effect of attraction (a) of the shoulders 11, 12 towards the saddle mount 4.

To further advantage, the column 3 has a symmetrical structure and is equipped with identical and opposed linear motors 9. Said linear motors 9 move the flanks of the saddle mount so as to exert an identical but opposed effect of attraction (a) of the shoulders 11, 12 towards the saddle mount 4. In other words, both the column 3 and the saddle mount 4 are subjected to an action, balanced overall, which does not alter the structural symmetry of the portal column but, unusually, increases its robustness and rigidity.

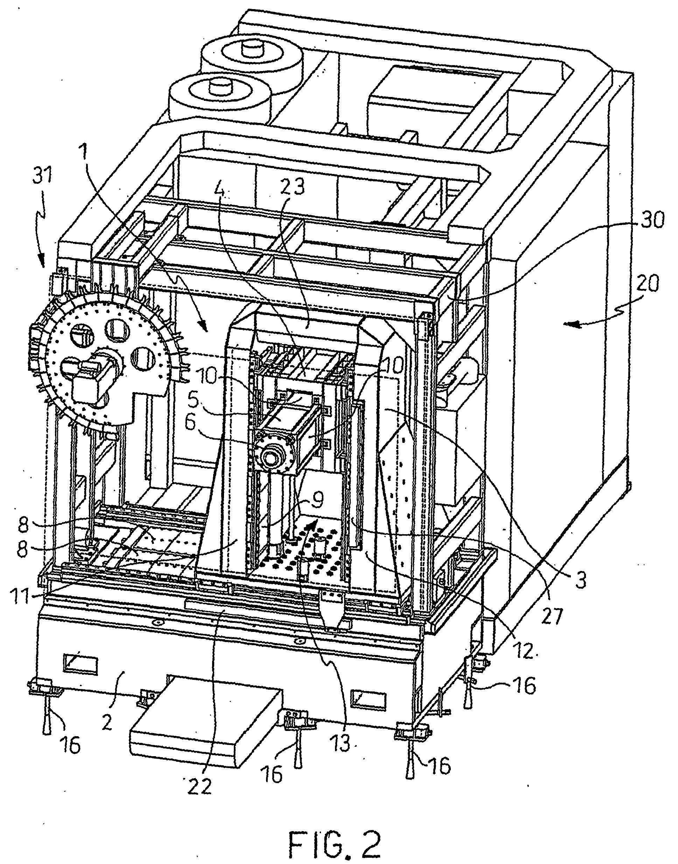

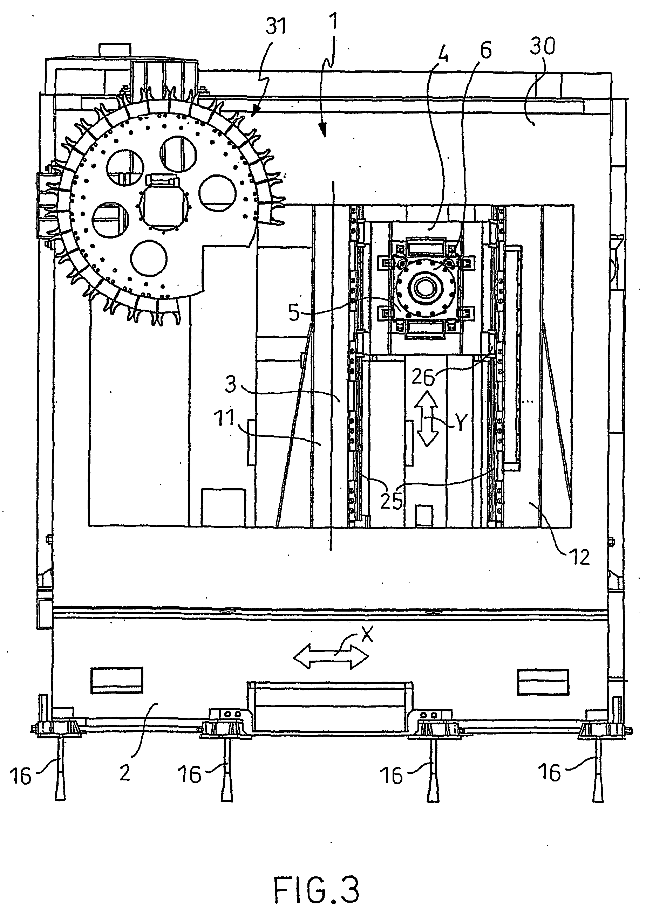

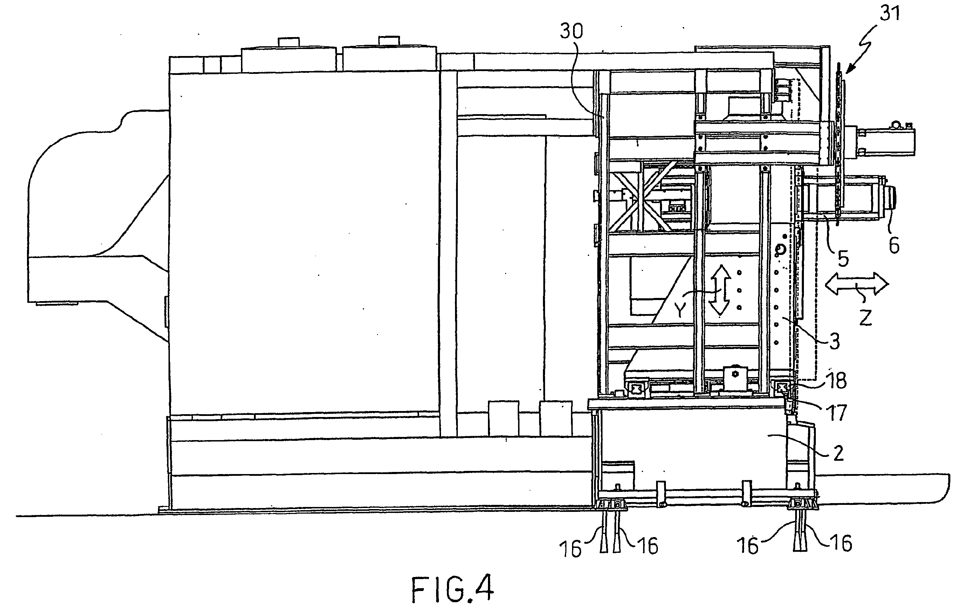

According to one embodiment, the bed 2 comprises a box-type structure reinforced by stiffening ribs. Said box-type structure is advantageously filled with material suitable for damping the vibrations induced by the movement of the machine and by the machining operations. For example, the box-type structure of the bed 2 is filled with polymeric cement. The box-type structure of the bed 2 is, in particular, bounded by a front wall 14 facing towards the working volume of the machine tool 1, and also by an upper wall 15 bounded by a horizontal upper surface having longitudinal edges. Underneath, the bed 2 is adapted to bear on a foundation to which it is fixed, for example, by means of self-levelling bolts 16 (Figures 2, 3, 4).

Integral with the surface of the upper wall 15, a pair of linear guides 17 is provided, defining the first of said axes (X). Preferably, the linear guides 17 of the pair of guides are spaced from each other. In particular, each of said linear guides 17 is fixed to the bed 2 in proximity to its longitudinal edges. According to one embodiment, each of said linear guides 17 has a cross-section provided with undercut flanks or, in other words, re-entrant flanks having a recumbent V-shape. Said flanks define pairs of tracks for the sliding of balls or, preferably, rollers, having oblique and crossed normals to one another.

Between the pair of linear guides 17, groups of stator elements of linear motors are provided, for example, groups of permanent magnets. Advantageously, said groups of stator elements- constitute stator elements of a pair of linear motors arranged between the spaced linear guides 17 to constitute a traction bed.

According to one embodiment, the linear motors of said pair are arranged side by side with each other and, for example, cover substantially the entire distance provided between the linear guides. In particular, the linear motors of the pair of linear motors are arranged to be electromagnetically aligned with one another, in other words, so as to exert on the column an action which is balanced and aligned in the direction of the axis (X), avoiding or limiting the development of thrusts on the column such as to cause reactions transverse to the linear guides.

The linear guides 17 defining the first axis (X) have associated with them sliding blocks 18 integral with a carriage 19. Said carriage 19 is provided with an upper surface, a lower surface facing the bed 2, longitudinal edges directed along the first axis (X) and transverse edges, for example orthogonal to the first axis (X). Advantageously, said sliding blocks 18 are preloaded for their movement along the guides 17 without play. To further advantage, said sliding blocks are sliding blocks with recirculating rollers, for example, of the lubricated type, acting on the tracks of the linear guides 17 of the bed 2. According to one embodiment, the sliding blocks 18 are four in number and arranged below and in proximity to the vertices of the carriage 19.

Below the carriage, and facing the groups of stator elements of the bed 2, groups of driven elements of linear motors are provided, advantageously a pair of groups of driven elements, for example, groups of coil packs. Said pair of groups of driven elements are operably coupled to the pair of groups of stator elements so as to move the carriage along said linear guides 17 defining the first axis (X).

According to one embodiment, first groups of driven elements, constituting an element of a first linear motor, are placed alongside a second group of driven elements, constituting a second linear motor. Said first and second groups of driven elements are electromagnetically aligned with one another so as to exert on the column the balanced and aligned actions described above.

According to a further embodiment, said driven groups can be positioned below the carriage so as to be adjustable in the direction of the axis (X), so as to align the action of the linear motors on the column. For example, at least one of the coil packs of the first or second linear motor is connected to the carriage by way of bolts received in slots which extend in the direction of the axis (X). Owing to the provision of the adjustable connections it is possible to align the electromagnetic effect generated by the linear motors arranged side by side at the expense of the geometric alignment thereof.

The groups of coil packs are operably connected to a drive device 20 controlled by a control unit 21. Advantageously, said drive is operated in a controlled manner also owing to a series of feedbacks, for example, in current and in velocity, as well as in position. In particular, the position feedback is effected by means of the operable connection of the control unit 21 with a position transducer 22, such as, for example, a linear position transducer, for example of the magnetic, optical (optical rule) or laser type. Said transducer 22 is for example provided on the bed in proximity to the linear guides 17 (Figure 2).

Transversely to the first axis (X), from the carriage 19, away from the bed 2 and preferably in a vertical direction, rise up the two shoulders 11, 12 which are identical and opposed to each other. According to one embodiment, the shoulders 11, 12 are alongside the longitudinal edge of the carriage facing the working volume of the machine tool 1. Said shoulders 11, 12 are reinforced at the rear owing to the provision of ribs or reinforcing plates which connect an end of the shoulders which is fixed to the carriage, or base of the shoulders, to the carriage itself. Further ribs or reinforcing plates are also provided which are arranged externally to the shoulders 11, 12, opposed to one another and arranged in the direction of the first axis (X) for further reaction for the stresses induced on the shoulders by the acceleration of the carriage in the direction of said first axis (X). The ends of the shoulders 11, 12 remote from the bed 2, or free ends of the shoulders, are firmly fixed to each other by means of a cross-member 23, which with the shoulders 11, 12 defines the portal column 3.

Together with the carriage 19, the shoulders 11, 12 and the cross-member 23 constitute a closed structure defining a symmetrical ring with opposed parallel sides. Said portal column 3 bounds the window 13 within which the saddle mount 4 is arranged.

The structure of the shoulders 11, 12 and of the cross-member 23 is advantageously of the box type, preferably provided with cellular internal reinforcements. According to one embodiment, said box-type structure comprises a shell of thin metallic material which includes ribs or a self-supporting structure with reinforcing baffles, as well as a framework. Advantageously, the spaces bounded by the box-type structure are filled with damping material which is at the same time light, such as, for example, polymeric resin in which light, rigid fillers are embedded.

The side of the shoulders which faces towards the window 13 is bounded by facing walls 24 having longitudinal edges, for example arranged vertically. On each of said facing walls 24 is provided a pair of linear guides 25 opposed to each other. On each of the shoulders 11, 12, the guides 25 of said pair of linear guides are arranged so as to be spaced from each other, for example, in proximity to the longitudinal edges of the facing walls 24. Said opposed pairs of linear guides 25 define the second of said axes (Y axis). Said second axis is advantageously orthogonal to the first axis (X) and is, for example, vertical. Analogously to the linear guides 17 defining the first axis (X), each of said guides 25 of the column 3 has a cross-section provided with undercut flanks or, in other words, with re-entrant flanks having a recumbent V-shape. Said flanks define pairs of tracks for the sliding of balls or, preferably, rollers, having oblique and crossed normals to one another.

On each of the facing walls 24 are provided groups of stator elements of linear motors 9, for example coil packs. Said groups are arranged between the guides 25 of the pairs of linear guides of the shoulders 11, 12 so as to face one another.

According to one embodiment, the facing groups of stator elements are adjustably connected to the walls in order to be able to align the action exerted by the linear motors on the saddle mount.

The guides 25 of the column 3 defining the second axis (Y) have associated with them sliding blocks 26 integral with the saddle mount 4. According to one embodiment, the saddle mount 4 comprises a box-type symmetrical structure provided with flanks facing the shoulders 11, 12. In particular, said box-type structure comprises a closed section which defines internally a support and guide seat for the main saddle 5. Said seat constitutes a through aperture bounded by a polygonal shell having surfaces which are preferably horizontal and transverse to said first and second axis (X, Y). According to one embodiment, the sliding blocks 26 are provided in proximity to the eight vertices of said box-type structure, so as to be associated with the respective linear guides 25 of the facing pairs of guides of the shoulders 11, 12. Said sliding blocks 26 are preloaded and of the type with recirculating lubricated rollers, and have characteristics analogous to those described above for the coupling of the sliding blocks 18 to the guides 17 defining the first axis (X).

Associated with the flanks of the saddle mount 4, groups of driven elements of linear motors 9, for example permanent magnets, are provided. Said groups of driven elements are operably coupled to the groups of stator elements provided on the shoulders 11, 12. As for the linear motors 8 of the first axis (X), the pair of motors associated with the flanks of the saddle mount 4 are also operated in a controlled manner, by means of a drive 20 controlled by a control unit 21. In particular, the linear motors 9 acting on the flanks of the saddle mount 4 are operated so as to be synchronised with one another for movement of the saddle mount 4 along said guides 25 of the second axis (Y).

Analogously to the first axis (X), the drive 20 and the control unit 21 of the linear motors 9 are operated with feedback, in particular with a saddle mount position transducer, for example a linear transducer of the magnetic, optical 27 or laser type (Figure 2).

With the saddle mount 4 there is advantageously interlocked a device for balancing its weight, for example a device with balancing cylinder and piston with hydraulic or pneumatic drive.

Associated with the polygonal shell bounding the seat for the main saddle 5, sliding blocks 28 are provided. Preferably, pairs of sliding blocks 28 are provided at the eight vertices of the polygonal shell. In other words, sixteen sliding blocks 28 are associated with both the walls bounding the_ eight vertices of the polygonal shell. Analogously to the first and second axis (X, Y), said sliding blocks 28 are preloadable and with, for example, recirculation of lubricated rollers.

Between said sliding blocks 28 and at each wall of the polygonal shell, groups of stator elements of linear motors 10 are provided.

In said internal seat of the box-type structure of the saddle mount 4, the main saddle 5 is received such that four pairs of linear guides 29 fixed to the main saddle 5 are associated with the eight pairs of sliding blocks 28 of the saddle mount 4 to define said third axis (Z).

Said main saddle 5 comprises a box-type structure having a polygonal outer surface and a front portion facing towards the working volume of the machine tool 1. Said linear guides 29 are fixed to the outer polygonal surface so as to be spaced from one another, for example, in proximity to the longitudinal edges of the main saddle 5, so as to receive between them groups of driven elements of linear motors 10 fixed to the main saddle 5 such as to be operably coupled to said groups of stator elements provided in the saddle mount, for movement of the main saddle along the guides 29 defining said third axis (Z).

As for the linear motors 8, 9 of the first and second axis (X, Y), the four motors associated with the polygonal outer surface of the main saddle 5 are also adjustably connected to that surface in order to align the actions exerted by the linear motors on the main saddle 5. Said motors are further operated in a controlled manner, by means of a drive 20 operated by a control unit 21. In particular, the linear motors 10 acting on the main saddle 5 are operated so as to be synchronised with one another for movement of the main saddle 5 along said guides 29 of the third axis (Z). Analogously to the first and second axis (X, Y), the drive 20 and the control unit 21 for the linear motors 10 are operated with feedback, in particular with a main saddle position transducer, for example a linear transducer of the magnetic, optical or laser type.

The main saddle 5 firmly comprises the spindle 6 adapted for the controlled movement of a machining tool. Said spindle 6 is firmly fixed to the main saddle so that the operative end thereof extends from the front portion of the main saddle, projecting into the working volume.

In other words, owing to the drive, operated in a controlled manner, of the linear motors interlocked with the three axis (X, Y, Z), the main saddle reaches with its front portion a predefined position of the working volume of the machine tool 1, following the desired trajectory and law of motion (time law).

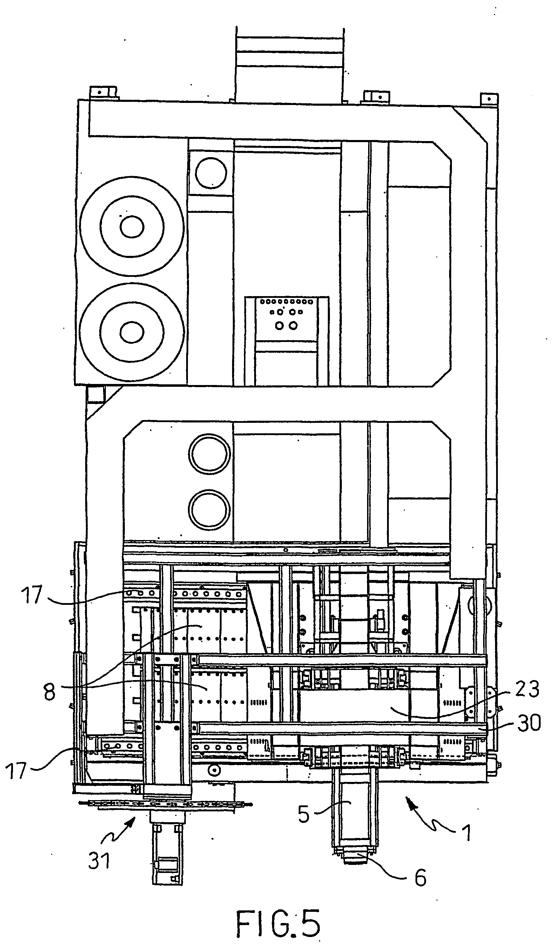

From the drawings it is further possible to observe a machining centre including a machine tool 1 of the type described above (Figures 2, 3, 4 and 5).

According to one embodiment, the machine tool 1 has associated with it a frame structure 30 which permits free movement of the machine along its axes (X, Y, Z) and at the same time makes it possible to interlock with the machine service devices, such as, for example, a tool change device 31, for rapid and automatic substitution of the tool supported by the spindle 6, as well as an automatic device for feeding the tools to the tool change device, operably connected to a tool magazine. Said frame structure further makes it possible to interlock with the machine tool 1 a cutting fluid feed device, as well as a chip removal device. In particular, said frame structure makes it possible to support panels which constitute protective barriers enclosing the machine and its working volume.

From the above it will be appreciated how providing the column with portal structure within which the saddle mount is supported and guided, together with the provision of linear motors interposed between shoulders of the column and flanks of the saddle mount, producing an effect of attraction of the shoulders towards the saddle mount, allows the drawbacks of the prior art to be obviated.

Advantageously, said interaction of the portal structure and the attraction effect of the linear motors makes it possible to produce a machine tool and a machining centre of low weight and bulk while maintaining an equal working volume. In particular, the solution proposed makes it possible to obtain a light structure which is unusually robust and rigid to the point of allowing accelerations of the axes even greater than 1 G, for example from 1 G to 2 G and preferably of 1.1 G. A further advantage of the solution proposed lies in its unusual structural simplicity, which makes it possible to produce the machine and the machining centre at a contained cost and also obtain easier assembly of the machine.

For greater understanding of the solution proposed, emphasis is placed on the simplicity of control, described above, of the movement of the axes (X, Y, Z) and in particular of the first axis (X). The solution proposed makes it possible to obtain a column of particular robustness and rigidity which in the prior art can be obtained only by way of the much more complicated known production techniques such as a gantry, where the column is supported and guided from both ends. With the solution proposed it is possible to obtain a high degree of robustness and rigidity while avoiding the complex and costly task of supporting and moving synchronously the two ends of the column.

Advantageously, the provision between the column and the bed of preloaded roller guides and a bed of linear motors allows connection between the latter which is rigid and at the same time capable of rapid responses to movement commands issued by the drive (increased readiness).
A person skilled in the art, in order to fulfil contingent and specific requirements, may apply to the preferred embodiment of the machine tool described above many modifications, adaptations and substitutions of elements with other functionally equivalent elements, without thereby departing from the scope of the following claims.

## Claims

1. A machine tool driven by linear motors along a plurality of axes, comprising
- a bed which defines at least a first axis (X),
- at least one column operably connected and supported only at one of its ends by said bed, for its guided movement along the first axis (X), said at least one column extending away from the bed to define a second axis (Y),
- at least one saddle mount operably connected and supported by the at least one column, for its guided movement along the second axis (Y),
- at least one main saddle supported by the saddle mount, for its guided movement along a third axis (Z) and supporting a spindle for the movement of a tool,
**characterized in that**
- said at least one column comprises a portal structure having a first shoulder opposed to a second shoulder such as to define a window within which the saddle mount is arranged, and that
- between said opposed shoulders and the saddle mount, linear motors are interposed such as to move the saddle mount along said second axis (y) while producing an effect of attraction of the shoulders towards the saddle mount.

2. A machine according to claim 1, wherein said at least one column comprises a symmetrical structure.

3. A machine according to claim 1 or 2, wherein said at least one column comprises a box-type body structure with internal reinforcements in a cellular arrangement.

4. A machine according to any one of claims 1 to 3, wherein said at least one column comprises a structure which widens out from a free end thereof to an end connected to the bed.

5. A machine according to claim 4, wherein the at least one column comprises reinforcing plates in proximity to a base by which it is connected to the bed.

6. A machine according to any one of claims 1 to 5, wherein the shoulders of the at least one portal column are joined mechanically at their free end by means of a cross-member.

7. A machine according to any one of claims 1 to 6, wherein the at least one column is supported at a carriage to form a closed ring structure within which the saddle mount is received.

8. A machine according to any one of the preceding claims, wherein said first, second and third axis (X, Y, Z) are orthogonal to one another.

9. A machine according to any one of the preceding claims, wherein each axis (X; Y; Z) is driven by means of at least one linear motor.

10. A machine according to any one of the preceding claims, wherein each linear motor is operably connected to a drive and control unit with feedback.

11. A machine according to claim 10, wherein said drive and control unit is provided with feedback at least by means of a position transducer interlocked with each axis.

12. A machine according to claim 11, wherein said transducer is a linear transducer.

13. A machine according to claim 12, wherein said transducer is a magnetic type transducer.

14. A machine according to claim 12, wherein said transducer is an optical type transducer.

15. A machine according to any one of the preceding claims, wherein each linear motor comprises a group of stator elements and a group of driven elements.

16. A machine according to claim 15, wherein said group of stator elements is provided in the bed, while said group of driven elements is provided in the at least one column.

17. A machine according to claim 15, wherein said group of stator elements is provided in the shoulders of the at least one column, while said group of driven elements is provided in the saddle mount.

18. A machine according to claim 15, wherein said group of stator elements is provided in the saddle mount, while said group of driven elements is provided in the main saddle.

19. A machine according to any one of the preceding claims, wherein the first axis (X) is defined by at least one pair of linear guides, integral with the bed, on which travel sliding blocks integral with the at least one column.

20. A machine according to claim 19, wherein the guides of said at least one pair of linear guides are arranged in proximity to longitudinal edges of the bed.

21. A machine according to claim 20, wherein at least one pair of linear motors, adapted to move the at least one column, is provided between the guides.

22. A machine according to any one of claims 19 to 21, wherein the sliding blocks have roller recirculation.

23. A machine according to claim 22, wherein the rollers of the sliding blocks with roller recirculation act on tracks, provided on the guides, in oblique and crossed directions.

24. A machine according to any one of claims 19 to 23, wherein said sliding blocks are coupled to the guides with preloading.

25. A machine according to any one of the preceding claims, wherein the second axis (Y) is defined by at least two opposed pairs of linear guides, integral with the shoulders, on which travel sliding blocks integral with the saddle mount.

26. A machine according to claim 25, wherein the sliding blocks are at least eight in number and are arranged in proximity to the vertices of the structure of the saddle mount.

27. A machine according to claim 25 or 26, wherein the guides of each of said at least two pairs of linear guides are arranged in proximity to the longitudinal edges of the shoulders.

28. A machine according to claim 27, wherein between the guides of each shoulder at least one linear motor is provided, adapted to move the saddle mount and exerting opposed and balanced effects of attraction of the shoulders towards the saddle mount.

29. A machine according to any one of claims 25 to 28, wherein the sliding blocks have roller recirculation.

30. A machine according to claim 29, wherein the rollers of the sliding blocks with roller recirculation act on tracks, provided on the guides, in oblique and crossed directions.

31. A machine according to any one of claims 25 to 30, wherein said sliding blocks are coupled to the guides with preloading.

32. A machine according to any one of the preceding claims, wherein the saddle mount comprises a box-type structure of closed section which defines internally a support and guide seat for the main saddle.

33. A machine according to any one of the preceding claims, wherein the third axis (Z) is defined by at least four opposed pairs of linear guides, integral with the main saddle, on which travel sliding blocks integral with the saddle mount.

34. A machine according to claim 33, wherein the sliding blocks are at least sixteen in number and are arranged in proximity to the vertices of the seat for the main saddle provided in the saddle mount.

35. A machine according to claim 33 or 34, wherein the guides of each of said at least four pairs of linear guides are arranged in proximity to the longitudinal edges of the main saddle.

36. A machine according to claim 35, wherein between each pair of guides at least one linear motor adapted to move the main saddle is provided.

37. A machine according to any one of claims 33 to 36, wherein the sliding blocks have roller recirculation.

38. A machine according to claim 37, wherein the rollers of the sliding blocks with roller recirculation act on tracks, provided on the guides, in oblique and crossed directions.

39. A machine according to any one of claims 33 to 38, wherein said sliding blocks are coupled to the guides with preloading.

40. A machine according to any one of the preceding claims, wherein material capable of damping the vibrations is provided in the bed.

41. A machine according to claim 40, wherein polymeric cement is provided in the bed.

42. A machine according to any one of the preceding claims, wherein the column comprises a box-type structure having a thin shell which includes reinforcing ribs.

43. A machine according to any one of the preceding claims, wherein the column comprises a box-type structure containing damping material.

44. A machine according to any one of the preceding claims, wherein the column comprises a box-type structure containing polymeric resin incorporating light and rigid fillers.

45. A machine according to any one of the preceding claims, wherein, associated with each axis (X, Y, Z), a position transducer of the laser type is provided.

46. A machine according to any one of the preceding claims, wherein each pair of linear motors associated with the same axis (X; Y; Z) is adjustably connected to the structure of the machine to balance and align the action exerted by the linear motors on the axis.

47. A machining centre comprising a machine as described in any one of the preceding claims.

48. A machining centre according to claim 47, wherein an automatic tool change is included.

49. A machining centre according to claim 48, wherein an automatic tool feeding device which is operably connected to a tool magazine is interlocked with said tool change.

## Patentansprüche

1. Maschinenwerkzeug bzw. Werkzeugmaschine, die durch Linearmotoren entlang einer Mehrzahl von Achsen angetrieben ist, umfassend
- ein Bett bzw. Lagerfläche, welches wenigstens eine erste Achse (X) definiert,
- wenigstens eine Säule, die betätigbar verbunden ist nur mit und an einem ihrer Enden durch das Bett abgestützt ist, für ihre geführte Bewegung entlang der ersten Achse (X), wobei sich die wenigstens eine Säule weg von dem Bett erstreckt, um eine zweite Achse (Y) zu definieren,
- wenigstens eine Sattellage bzw. -halterung bzw.-aufnahme, die betätigbar mit der wenigstens einen Säule verbunden ist und durch diese unterstützt ist, für ihre geführte Bewegung entlang der zweiten Achse (Y),
- wenigstens einen Hauptsattel, der durch die Sattellage abgestützt ist, für seine geführte Bewegung entlang einer dritten Achse (Z), und der eine Spindel für die Bewegung eines Werkzeugs abstützt,
**dadurch gekennzeichnet, daß**
- die wenigstens eine Säule eine Portalstruktur umfaßt, die eine erste Schulter gegenüberliegend bzw. entgegengesetzt einer zweiten Schulter derart aufweist, um ein Fenster zu definieren, innerhalb welchem die Sattellage angeordnet ist, und daß
- zwischen den gegenüberliegenden bzw. entgegengesetzten Schultern und der Sattellage Linearmotoren derart zwischengelagert sind, um die Sattellage entlang der zweiten Achse (y) zu bewegen, während eine Wirkung einer Anziehung der Schultern zu der Sattellage erzeugt ist bzw. wird.

2. Maschine nach Anspruch 1, wobei die wenigstens eine Säule eine symmetrische Struktur umfaßt.

3. Maschine nach Anspruch 1 oder 2, wobei die wenigstens eine Säule eine schachtelartige Körperstruktur mit inneren Verstärkungen in einer zellenartigen Anordnung umfaßt.

4. Maschine nach einem der Ansprüche 1 bis 3, wobei die wenigstens eine Säule eine Struktur umfaßt, welche sich von einem freien Ende davon zu einem Ende aufweitet, das mit dem Bett verbunden ist.

5. Maschine nach Anspruch 4, wobei die wenigstens eine Säule verstärkende bzw. Verstärkungsplatten in der Nachbarschaft zu einer Basis umfaßt, durch welche sie mit dem Bett verbunden ist.

6. Maschine nach einem der Ansprüche 1 bis 5, wobei die Schultern der wenigstens einen Portalsäule mechanisch an ihrem freien Ende durch wenigstens ein Kreuzglied verbunden sind.

7. Maschine nach einem der Ansprüche 1 bis 6, wobei die wenigstens eine Säule auf einem Schlitten bzw. Wagen abgestützt ist, um eine geschlossene Ringstruktur bzw. Struktur eines geschlossenen Rings auszubilden, innerhalb welcher die Sattellage aufgenommen ist.

8. Maschine nach einem der vorhergehenden Ansprüche, wobei die erste, zweite und dritte Achse (X, Y, Z) orthogonal zueinander sind.

9. Maschine nach einem der vorhergehenden Ansprüche, wobei jede Achse (X; Y; Z) mittels wenigstens eines Linearmotors angetrieben ist.

10. Maschine nach einem der vorhergehenden Ansprüche, wobei jeder Linearmotor betätigbar mit einer Antriebs-und Regeleinheit mit Rückkopplung verbunden ist.

11. Maschine nach Anspruch 10, wobei die Antriebs- und Regeleinheit mit einer Rückkopplung wenigstens mittels eines Positionsaufnehmers bzw. -wandlers versehen ist, der mit jeder Achse verriegelt ist.

12. Maschine nach Anspruch 11, wobei der Wandler ein Linearwandler ist.

13. Maschine nach Anspruch 12, wobei der Wandler ein Wandler der magnetischen Art ist.

14. Maschine nach Anspruch 12, wobei der Wandler ein Wandler der optischen Art ist.

15. Maschine nach einem der vorhergehenden Ansprüche, wobei jeder Linearmotor eine Gruppe von Statorelementen und eine Gruppe von angetriebenen Elementen umfaßt.

16. Maschine nach Anspruch 15, wobei die Gruppe von Statorelementen in dem Bett zur Verfügung gestellt ist, während die Gruppe von angetriebenen Elementen in der wenigstens einen Säule zur Verfügung gestellt ist.

17. Maschine nach Anspruch 15, wobei die Gruppe von Statorelementen in den Schultern der wenigstens einen Säule zur Verfügung gestellt ist, während die Gruppe von angetriebenen Elementen in der Sattellage zur Verfügung gestellt ist.

18. Maschine nach Anspruch 15, wobei die Gruppe von Statorelementen in der Sattellage zur Verfügung gestellt ist, während die Gruppe von angetriebenen Elementen in dem Hauptsattel zur Verfügung gestellt ist.

19. Maschine nach einem der vorhergehenden Ansprüche, wobei die erste Achse (X) durch wenigstens ein Paar von linearen bzw. Linearführungen definiert ist, die mit dem Bett einstückig bzw. integral sind, an welchem Gleitblöcke einstückig bzw. integral mit der wenigstens einen Säule gleiten bzw. sich bewegen.

20. Maschine nach Anspruch 19, wobei die Führungen des wenigstens eines Paars von Linearführungen in der Nachbarschaft von Längskanten bzw. -rändern des Betts angeordnet sind.

21. Maschine nach Anspruch 20, wobei wenigstens ein Paar von Linearmotoren, die adaptiert sind, um die wenigstens eine Säule zu bewegen, zwischen den Führungen zur Verfügung gestellt ist.

22. Maschine nach einem der Ansprüche 19 bis 21, wobei die Gleitblöcke eine Rollen- bzw. Walzenrezirkulation bzw. rückführung aufweisen.

23. Maschine nach Anspruch 22, wobei die Walzen der Gleitblöcke mit Walzenrezirkulation auf Spuren bzw. Gleitbahnen bzw. Gleisketten, die auf den Führungen zur Verfügung gestellt sind, in schrägen und gekreuzten Richtungen wirken.

24. Maschine nach einem der Ansprüche 19 bis 23, wobei die Gleitblöcke mit den Führungen mit Vorlast bzw. belastung gekoppelt sind.

25. Maschine nach einem der vorhergehenden Ansprüche, wobei die zweite Achse (Y) durch wenigstens zwei gegenüberliegende bzw. entgegengesetzte Paare von Linearführungen definiert ist, die einstückig bzw. integral mit den Schultern sind, an welchen Gleitblöcke einstückig bzw. integral mit der Sattellage gleiten.

26. Maschine nach Anspruch 25, wobei die Gleitblöcke wenigstens acht in der Zahl sind und in der Nachbarschaft der Scheitel der Struktur der Sattellage angeordnet sind.

27. Maschine nach Anspruch 25 oder 26, wobei die Führungen von jedem der wenigstens zwei Paare von Linearführungen in der Nachbarschaft der Längskanten bzw. -ränder der Schultern angeordnet sind.

28. Maschine nach Anspruch 27, wobei zwischen den Führungen von jeder Schulter wenigstens ein Linearmotor zur Verfügung gestellt ist, der adaptiert ist, um die Sattellage zu bewegen, und gegenüberliegende bzw. entgegengesetzte und ausbalancierte Effekte einer Anziehung der Schultern zu der Sattellage ausübt.

29. Maschine nach einem der Ansprüche 25 bis 28, wobei die Gleitblöcke eine Walzenrezirkulation aufweisen.

30. Maschine nach Anspruch 29, wobei die Walzen der Gleitblöcke mit Walzenrezirkulation auf Spuren bzw. Gleitbahnen bzw. Gleisketten, die an den Führungen vorgesehen sind, in geneigten und gekreuzten Richtungen wirken.

31. Maschine nach einem der Ansprüche 25 bis 30, wobei die Gleitblöcke mit den Führungen mit Vorlast gekoppelt sind.

32. Maschine nach einem der vorhergehenden Ansprüche, wobei die Sattellage eine schachtelartige Struktur eines geschlossenen Querschnitts umfaßt, welcher im Inneren einen Support bzw. eine Abstützung und einen Führungssitz für den Hauptsattel definiert.

33. Maschine nach einem der vorhergehenden Ansprüche, wobei die dritte Achse (Z) durch wenigstens vier gegenüberliegende Paare von Linearführungen definiert ist, die einstückig bzw. integral mit dem Hauptsattel sind, an welchem Gleitblöcke einstückig bzw. integral mit der Sattellage gleiten bzw. sich bewegen.

34. Maschine nach Anspruch 33, wobei die Gleitblöcke wenigstens sechzehn in der Zahl sind und in der Nachbarschaft der Scheitel des Sitzes für den Hauptsattel angeordnet sind, der in der Sattellage zur Verfügung gestellt ist.

35. Maschine nach Anspruch 33 oder 34, wobei die Führungen von jedem der wenigstens vier Paare von Linearführungen in der Nachbarschaft der Längskanten bzw. -ränder des Hauptsattels angeordnet sind.

36. Maschine nach Anspruch 35, wobei zwischen jedem Paar von Führungen wenigstens ein Linearmotor, der adaptiert ist, um den Hauptsattel zu bewegen, zur Verfügung gestellt ist.

37. Maschine nach einem der Ansprüche 33 bis 36, wobei die Gleitblöcke eine Walzenrezirkulation aufweisen.

38. Maschine nach Anspruch 37, wobei die Walzen der Gleitblöcke mit Walzenrezirkulation auf Spuren bzw. Gleitbahnen bzw. Gleisketten, die an den Führungen zur Verfügung gestellt sind, in geneigten und gekreuzten Richtungen wirken.

39. Maschine nach einem der Ansprüche 33 bis 38, wobei die Gleitblöcke mit den Führungen mit Vorlast gekoppelt sind.

40. Maschine nach einem der vorhergehenden Ansprüche, wobei Material, das fähig ist, die Vibrationen zu dämpfen, in dem Bett vorgesehen ist.

41. Maschine nach Anspruch 40, wobei Polymerzement in dem Bett vorgesehen ist.

42. Maschine nach einem der vorhergehenden Ansprüche, wobei die Säule eine schachtelartige Struktur umfaßt, die eine dünne Schale bzw. Gehäuse aufweist, welche Verstärkungsrippen beinhaltet.

43. Maschine nach einem der vorhergehenden Ansprüche, wobei die Säule eine schachtelartige Struktur umfaßt, die Dämpfungsmaterial enthält.

44. Maschine nach einem der vorhergehenden Ansprüche, wobei die Säule eine schachtelartige Struktur umfaßt, die Polymerharz enthält, das leichte und starre Füllstoffe inkorporiert.

45. Maschine nach einem der vorhergehenden Ansprüche, wobei assoziiert mit jeder Achse (X, Y, Z) ein Positionswandler bzw. -aufnehmer der Laserart zur Verfügung gestellt ist.

46. Maschine nach einem der vorhergehenden Ansprüche, wobei jedes Paar von Linearmotoren, das mit derselben Achse (X; Y; Z) assoziiert ist, einstellbar mit der Struktur der Maschine verbunden ist, um die Wirkung auszugleichen und auszurichten, die durch die Linearmotoren auf die Achsen ausgeübt ist bzw. wird.

47. Maschinenzentrum, umfassend eine Maschine, wie sie in einem der vorhergehenden Ansprüche beschrieben ist.

48. Maschinenzentrum nach Anspruch 47, wobei ein automatischer Werkzeugtausch bzw. -wechsel inkludiert ist.

49. Maschinenzentrum nach Anspruch 48, wobei eine automatische Werkzeugzufuhrvorrichtung, welche betätigbar mit einem Werkzeugmagazin verbunden ist, mit dem Werkzeugtausch bzw. der Werkzeugtauscheinrichtung verriegelt bzw. verbunden ist.

## Revendications

1. Machine-outil entraînée par des moteurs linéaires le long d'une pluralité d'axes, comprenant
- un banc qui définit au moins un premier axe (X),
- au moins une colonne fonctionnellement reliée et soutenue seulement en une de ses extrémités par ledit banc, en vue de son déplacement guidé le long du premier axe (X), ladite au moins une colonne se prolongeant à distance du banc afin de définir un deuxième axe (Y),
- au moins un support de corps de chariot fonctionnellement relié et soutenu par l'au moins une colonne, en vue de son mouvement guidé le long du deuxième axe (Y),
- au moins un corps de chariot principal soutenu par le support de corps de chariot, en vue de son mouvement guidé le long d'un troisième axe (Z) et soutenant une broche pour le mouvement d'un outil,
**caractérisée en ce que**
- ladite au moins une colonne comprend une structure à portique ayant un premier épaulement opposé à un second épaulement de sorte à définir une fenêtre dans laquelle est placé le support de corps de chariot, et **en ce que**
- entre lesdits épaulements opposés et le support de corps de chariot, des moteurs linéaires sont intercalés de sorte à mouvoir le support de corps de chariot le long dudit deuxième axe (Y) tout en produisant un effet d'attraction des épaulements vers le support de corps de chariot.

2. Machine selon la revendication 1, dans laquelle ladite au moins une colonne comprend une structure symétrique.

3. Machine selon la revendication 1 ou 2, dans laquelle ladite au moins une colonne comprend une structure à corps du type boîte avec des renforts internes selon une configuration cellulaire.

4. Machine selon l'une quelconque des revendications 1 à 3, dans laquelle ladite au moins une colonne comprend une structure qui s'élargit depuis une extrémité libre de celle-ci jusqu'à une extrémité reliée au banc.

5. Machine selon la revendication 4, dans laquelle l'au moins une colonne comprend des plaques de renfort à proximité d'une base par laquelle elle est reliée au banc.

6. Machine selon l'une quelconque des revendications 1 à 5, dans laquelle les épaulements de l'au moins une colonne portique sont assemblés mécaniquement en leur extrémité libre au moyen d'un élément transversal.

7. Machine selon l'une quelconque des revendications 1 à 6, dans laquelle l'au moins une colonne est soutenue au droit d'un chariot pour former une structure annulaire fermée à l'intérieur de laquelle le support de corps de chariot est reçu.

8. Machine selon l'une quelconque des revendications précédentes, dans laquelle lesdits premier, deuxième et troisième axes (X, Y, Z) sont orthogonaux les uns aux autres.

9. Machine selon l'une quelconque des revendications précédentes, dans laquelle chaque axe (X ; Y ; Z) est entraîné par au moins un moteur linéaire.

10. Machine selon l'une quelconque des revendications précédentes, dans laquelle chaque moteur linéaire est fonctionnellement connecté pour entraîner et commander l'unité avec rétroaction.

11. Machine selon la revendication 10, dans laquelle ladite unité d'entraînement et de commande est dotée de rétroaction au moins au moyen d'un transducteur de position interverrouillé avec chaque axe.

12. Machine selon la revendication 11, dans laquelle ledit transducteur est un transducteur linéaire.

13. Machine selon la revendication 12, dans laquelle ledit transducteur est un transducteur du type magnétique.

14. Machine selon la revendication 12, dans laquelle ledit transducteur est un transducteur du type optique.

15. Machine selon l'une quelconque des revendications précédentes, dans laquelle chaque moteur linéaire comprend un groupe d'éléments de stator et un groupe d'éléments menés.

16. Machine selon la revendication 15, dans laquelle ledit groupe d'éléments de stator est fourni dans le banc, alors que ledit groupe d'éléments menés est fourni dans l'au moins une colonne.

17. Machine selon la revendication 15, dans laquelle ledit groupe d'éléments de stator est fourni dans les épaulements de l'au moins une colonne, alors que ledit groupe d'éléments menés est fourni dans le support de corps de chariot.

18. Machine selon la revendication 15, dans laquelle ledit groupe d'éléments de stator est fourni dans le support de corps de chariot, alors que ledit groupe d'éléments menés est fourni dans le corps de chariot principal.

19. Machine selon l'une quelconque des revendications précédentes, dans laquelle le premier axe (X) est défini par au moins une paire de guides linéaires, solidaires du banc, sur lesquels se déplacent des blocs coulissants solidaires de l'au moins une colonne.

20. Machine selon la revendication 19, dans laquelle les guides de ladite au moins une paire de guides linéaires sont placés à proximité des bords longitudinaux du banc.

21. Machine selon la revendication 20, dans laquelle au moins une paire de moteurs linéaires, adaptés à mouvoir ladite au moins une colonne, est fournie entre les guides.

22. Machine selon l'une quelconque des revendications 19 à 21, dans laquelle les blocs coulissants ont une recirculation à rouleaux.

23. Machine selon la revendication 22, dans laquelle les rouleaux des blocs coulissants pourvus d'une recirculation à rouleaux agissent sur des pistes, fournies sur les guides, dans des directions obliques et croisées.

24. Machine selon l'une quelconque des revendications 19 à 23, dans laquelle lesdits blocs coulissants sont accouplés aux guides avec une précharge.

25. Machine selon l'une quelconque des revendications précédentes, dans laquelle le deuxième axe (Y) est défini par au moins deux paires opposées de guides linéaires, solidaires des épaulements, sur lesquels se déplacent des blocs coulissants solidaires du support de corps de chariot.

26. Machine selon la revendication 25, dans laquelle les blocs coulissants sont au moins au nombre de huit et sont placés à proximité des sommets de la structure du support de corps de chariot.

27. Machine selon la revendication 25 ou 26, dans laquelle les guides de chacune desdites au moins deux paires de guides linéaires sont placés à proximité des bords longitudinaux des épaulements.

28. Machine selon la revendication 27, dans laquelle entre les guides de chaque épaulement au moins un moteur linéaire est fourni, adapté à mouvoir le support de corps de chariot et exercer des effets d'attraction opposés et équilibrés des épaulements vers le support de corps de chariot.

29. Machine selon l'une quelconque des revendications 25 à 28, dans laquelle les blocs coulissants ont une recirculation à rouleaux.

30. Machine selon la revendication 29, dans laquelle les rouleaux des blocs coulissants pourvus d'une recirculation à rouleaux agissent sur des pistes, fournies sur les guides, dans des directions obliques et croisées.

31. Machine selon l'une quelconque des revendications 25 à 30, dans laquelle lesdits blocs coulissants sont accouplés aux guides avec une précharge.

32. Machine selon l'une quelconque des revendications précédentes, dans laquelle le support de corps de chariot comprend une structure du type boîte de section fermée qui définit intérieurement un support et siège de guide pour le corps de chariot principal.

33. Machine selon l'une quelconque des revendications précédentes, dans laquelle le troisième axe (Z) est défini par au moins quatre paires opposées de guides linéaires, solidaires du corps de chariot principal, sur lesquels se déplacent des blocs coulissants solidaires du support de corps de chariot.

34. Machine selon la revendication 33, dans laquelle les blocs coulissants sont au moins au nombre de seize, et sont placés à proximité des sommets du siège pour le corps de chariot principal fourni dans le support de corps de chariot.

35. Machine selon la revendication 33 ou 34, dans laquelle les guides de chacune desdites au moins quatre paires de guides linéaires sont placés à proximité des bords longitudinaux du corps de chariot principal.

36. Machine selon la revendication 35, dans laquelle entre chaque paire de guides est fourni au moins un moteur linéaire adapté à mouvoir le corps de chariot principal.

37. Machine selon l'une quelconque des revendications 33 à 36, dans laquelle les blocs coulissants ont une recirculation à rouleaux.

38. Machine selon la revendication 37, dans laquelle les rouleaux des blocs coulissants pourvus d'une recirculation à rouleaux agissent sur des pistes, fournies sur les guides, dans des directions obliques et croisées.

39. Machine selon l'une quelconque des revendications 33 à 38, dans laquelle lesdits blocs coulissants sont accouplés aux guides avec une précharge.

40. Machine selon l'une quelconque des revendications précédentes, dans laquelle un matériau capable d'amortir les vibrations est fourni dans le banc.

41. Machine selon la revendication 40, dans laquelle un polymère-ciment est fourni dans le banc.

42. Machine selon l'une quelconque des revendications précédentes, dans laquelle la colonne comprend une structure du type boîte ayant une fine coque qui comprend des nervures de renforcement.

43. Machine selon l'une quelconque des revendications précédentes, dans laquelle la colonne comprend une structure du type boîte contenant un matériau amortisseur.

44. Machine selon l'une quelconque des revendications précédentes, dans laquelle la colonne comprend une structure du type boîte contenant une résine polymère incorporant des matières de charge légères et rigides.

45. Machine selon l'une quelconque des revendications précédentes, dans laquelle, associé à chaque axe (X, Y, Z), un transducteur de position du type laser est fourni.

46. Machine selon l'une quelconque des revendications précédentes, dans laquelle chaque paire de moteurs linéaires associés au même axe (X ; Y ; Z) est reliée de manière ajustable à la structure de la machine afin d'équilibrer et aligner l'action exercée par les moteurs linéaires sur l'axe.

47. Centre d'usinage comprenant une machine telle que décrite dans l'une quelconque des revendications précédentes.

48. Centre d'usinage selon la revendication 47, dans lequel un changement automatique d'outil est inclus.

49. Centre d'usinage selon la revendication 48, dans lequel un dispositif d'alimentation automatique d'outils qui est fonctionnellement relié à un magasin à outils est interverrouillé avec ledit changement d'outil.
